# EUROPEAN PATENT APPLICATION

(11) **EP 2 221 582 A2**
(43) Date of publication of application: **25.08.2010**
(21) Application number: 10153729.8
(22) Date of filing: 16.02.2010
(51) Int. Cl.: G01C 21/34, G08G 1/0968

(54) **Guide route distribution device and guide route distribution method**

(30) Priority: 19.02.2009 JP 2009036896
(71) Applicant: Sony Corporation, Tokyo (JP)
(72) Inventor: Miyata, Hiromasa, TOKYO (JP)
(74) Representative: Thévenet, Jean-Bruno

(57) **Abstract**

A guide route distribution device includes a reception unit (51) which receives information indicating a start point, information indicating a destination, map data generation information, and route search program generation information from an on-vehicle terminal, a storage unit (52), a first route search unit (53) which searches for a first route, a second route search unit (54) which searches for a second route, a comparison determination unit (55) which compares the first route and the second route and determines whether a predetermined guide route update condition is satisfied, and a transmission unit (56) which transmits the second route to the on-vehicle terminal only when the guide route update condition is satisfied.

## Description

### BACKGROUND OF THE INVENTION

### 1. Field of the Invention

The present invention relates to a guide route distribution device and a guide route distribution method, which is, for example, suitably applied to a car navigation device.

### 2. Description of the Related Art

In the related art, a car navigation system for performing route search based on map data of a portable navigation device (hereinafter, referred to as a Personal Navigation Device (PND)) as an on-vehicle terminal mounted in a vehicle have come into wide use.

Recently, there is provided a car navigation system for communicating with a server outside a vehicle connected through the Internet and enabling a PND to guide a route using a route search result acquired from the outside of the vehicle through a communication.

In either of the above-described car navigation systems, since actual roads or buildings are changed every day, if route search is performed based on map data of the PND, the PND preferably has latest map data as much as possible.

To this end, the PND downloads latest map data through the Internet or the like so as to update the map data of the PND to latest map data.

At this time, since a communication data amount of latest map data is significantly large, considerable time is consumed when the PND downloads the map data and a communication cost is incurred.

Therefore, a navigation system for sending only some of the map data from a server to a PND is suggested (for example, Japanese Patent No. 3942987). In detail, if there is a difference between routes as a result of comparing a route search based on map data of the PND with a route search based on latest map data of a server, a communication data amount is reduced by sending from the server to the PND map data corresponding only to the difference.

### SUMMARY OF THE INVENTION

However, in such a navigation system, even when a route having a difference is used, a time period, a money amount and a distance necessary for arriving at a destination may not be improved.

Even in such a case, in the above navigation system, if there is a difference in a route search result, map data corresponding to the difference is transmitted from the server and the map data of the PND is unconditionally rewritten.

To this end, the map data corresponding to the difference is transmitted to the PND of a user who wants route guidance on the route searched by the PND and does not want the rewriting of the map data of the PND to the map data from the server, and thus the communication data amount is generated in vain.

There is a need for a guide route distribution device and a guide route distribution method which are capable of reducing a communication data amount.

According to an embodiment of the present invention, there is provided a guide route distribution device including: a reception unit configured to receive information indicating a start point, information indicating a destination, map data generation information for identifying generation of map data possessed by an on-vehicle terminal, and route search program generation information for identifying generation of a route search program for performing route search of a guide route from the start point to the destination, which is possessed by the on-vehicle terminal, from the on-vehicle terminal; a storage unit configured to store map data of a plurality of generations including map data possessed by the on-vehicle terminal and route search programs of a plurality of generations including a route search program possessed by the on-vehicle terminal; a first route search unit configured to search for a first route which is a guide route from the start point to the destination, based on map data of a generation indicated by the map data generation information and a route search program of a generation indicated by the route search program generation information, which are read by the storage unit; a second route search unit configured to search for a second route which is a guide route from the start point to the destination, based on map data of a generation equal to or updated from the map data possessed by the on-vehicle terminal and a route search program of a generation equal to or updated from the route search program possessed by the on-vehicle terminal, which are read by the storage unit; a comparison determination unit configured to compare the first route and the second route and determine whether a predetermined guide route update condition is satisfied; and a transmission unit configured to transmit the second route to the on-vehicle terminal only when the guide route update condition is satisfied.

To this end, the guide route distribution device transmits the second route to the on-vehicle terminal only when the second route searched for by the guide route distribution device is significantly improved compared with the first route searched for by the on-vehicle terminal. Accordingly, the guide route distribution device can transmit the guide route to the on-vehicle with respect only to the guide route which is worthwhile in enabling the on-vehicle terminal to download communication data with respect to time or cost.

According to another embodiment of the present invention, there is provided a guide route distribution method including the steps of: at a predetermined reception unit, receiving information indicating a start point, information indicating a destination, map data generation information for identifying generation of map data possessed by an on-vehicle terminal, and route search program generation information for identifying generation of a route search program for performing route search of a guide route from the start point to the destination, which is possessed by the on-vehicle terminal, from the on-vehicle terminal; at a predetermined first route search unit, searching for a first route which is a guide route from the start point to the destination, based on map data of a generation indicated by the map data generation information and a route search program of a generation indicated by the route search program generation information, which are read by a predetermined storage unit; at a predetermined second route search unit, searching for a second route which is a guide route from the start point to the destination, based on map data of a generation equal to or updated from the map data possessed by the on-vehicle terminal and a route search program of a generation equal to or updated from the route search program possessed by the on-vehicle terminal, which are read by the storage unit; at a predetermined comparison determination unit, comparing the first route and the second route and determining whether a predetermined guide route update condition is satisfied; and at a predetermined transmission unit, transmitting the second route to the on-vehicle terminal only when the guide route update condition is satisfied.

To this end, the guide route distribution device transmits the second route to the on-vehicle terminal only when the second route searched for by the guide route distribution device is significantly improved compared with the first route searched for by the on-vehicle terminal. Accordingly, the guide route distribution device can transmit the guide route to the on-vehicle with respect only to the guide route which is worthwhile in enabling the on-vehicle terminal to download communication data with respect to time or cost.

According to the present invention, the guide route distribution device can transmit the guide route to the on-vehicle terminal with respect only to the guide route which is worthwhile in enabling the on-vehicle terminal to download communication data with respect to time or cost. Therefore, it is possible to realize a guide route distribution device and a guide route distribution method capable of reducing a communication data amount.

### BRIEF DESCRIPTION OF THE DRAWINGS

Fig. 1 is a schematic diagram illustrating the configuration of a navigation system.
Fig. 2 is a block diagram illustrating the circuit configuration of a PND.
Fig. 3 is a schematic diagram illustrating the circuit configuration of a route search server.
Fig. 4 is a sequence chart illustrating a route search processing procedure which is the outline of an embodiment.
Fig. 5 is a block diagram illustrating the functional block configuration of a guide route distribution device.
Fig. 6 is a flowchart illustrating a navigation processing procedure according to a first embodiment and a third embodiment.
Fig. 7 is a flowchart illustrating a guide route information distribution processing procedure according to the first embodiment.
Fig. 8 is a flowchart illustrating a navigation map image of a first route and a second route.
Fig. 9 is a flowchart illustrating a navigation processing procedure according to a second embodiment.
Fig. 10 is a flowchart illustrating a guide route information distribution processing procedure according to the second embodiment.
Fig. 11 is a flowchart illustrating a guide route information distribution processing procedure according to the third embodiment.

### DESCRIPTION OF THE PREFERRED EMBODIMENTS

Hereinafter, modes (hereinafter, referred to as embodiments) for carrying out the invention will be described. In addition, the description will be given in the following order.
1. First Embodiment (navigation system in which a guide route update condition is a time period)
2. Second Embodiment (navigation system in which a guide route update condition is a money amount)
3. Third Embodiment (navigation system in which a guide route update condition is a distance)
4. Other Embodiments

### 1. First Embodiment

### 1-1. Configuration of Navigation System

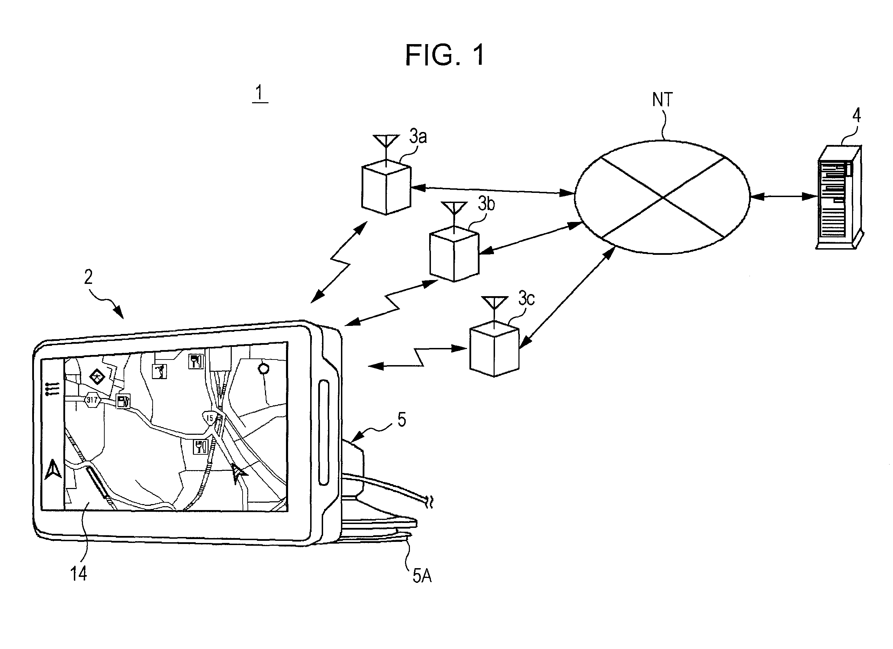

As shown in Fig. 1, a navigation system 1 according to an embodiment of the present invention includes a PND 2, a plurality of radio access points 3 (3a, 3b, 3c, ...), and a route search server 4.

When the PND 2 is wirelessly connected to any one of the plurality of radio access points 3, the PND 2 is connected to the route search server 4 through the radio access point 3 and the Internet NT.

A cradle 5 is mounted on a dashboard of a vehicle through a sucker 5A and is electrically connected to a battery of the vehicle.

The PND 2 may be attached to or detached from the cradle 5 and is held by the cradle 5 when being attached, such that the PND 2 and the cradle 5 are mechanical or electrically connected.

Accordingly, the PND 2 operates by power supplied from the battery of the vehicle via the cradle 5 and operates in an independent state by power supplied from a built-in battery when being detached from the cradle 5.

In the PND 2, a display unit 14 is provided on the front surface of the PND 2, and a map image or the like is displayed on the display unit 14 according to map data stored in a storage unit 13 (not shown) mounted in the PND 2.

Meanwhile, the route search server 4 distributes a variety of information (map data, guide route information or the like) associated with navigation to the PND 2 via the Internet NT.

### 1-2. Circuit Configuration of PND

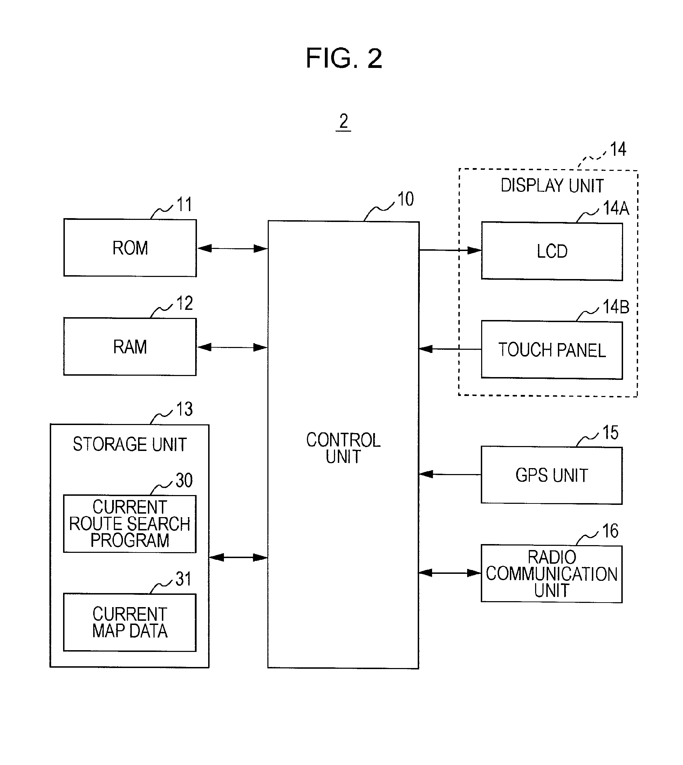

As shown in Fig. 2, the PND 2 has a control unit 10 including a Central Processing Unit (CPU). The control unit 10 develops a basic program stored in a Read Only Memory (ROM) 11 in a Random Access Memory (RAM) 12 so as to control the whole according to the basic program.

The control unit 10 of the PND 2 develops various types of application programs stored in the ROM 11 or the storage unit 13 in the RAM 12 and performs various types of processes such as navigation according to the application programs.

In the PND 2, a Global Positioning System (GPS) unit 15 is provided. The GPS unit 15 accurately measures the current position of the vehicle based on orbital data obtained by receiving and demodulating satellite signals from a plurality of GPS satellites and distance data from the plurality of GPS satellites to the vehicle. The GPS unit 15 supplies GPS information including current position information obtained by measurement and indicated by longitude and latitude and time information included in the satellite signals to the control unit 10.

The control unit 10 executes a route search program of a current version (hereinafter, referred to as a current route search program) 30 stored in the storage unit 13 and used by the user of the PND 2 so as to perform route search.

Version information (hereinafter, referred to as current route search program version information) (not shown) as information for identifying the generation of the current route search program 30 is stored in the storage unit 13 together with the current route search program 30. In addition, similar to current map data 31, the current route search program 30 may not be a route search program of a latest version.

The current map data (hereinafter, referred to as current map data) 31 used by the user of the PND 2 is stored in the storage unit 13 together with the version information (not shown) as the information for identifying the generation of the current map data 31. Hereinafter, the version information is called current map data version information. In addition, the current map data 31 may not be map data of a latest version.

Road data for display, road data for route search and building data associated with the positions of various types of facilities or buildings are included in the map data, and each data is indicated by a coordinate set of nodes (coordinate of points represented by longitude and latitude) and a link for connecting the nodes.

The control unit 10 reads peripheral map data including the current position of the vehicle based on the GPS information from the current map data 31 of the storage unit 13 to the RAM 12. The control unit 10 generates and outputs a map image including the current position from the read map data to a Liquid Crystal Display (LCD) 14A of the display unit 14 so as to display the map image.

A touch panel 14B for receiving a touch operation of the user is provided on the surface of the display unit 14. The control unit 10 searches for a guide route from a start point to a destination designated by the touch operation of the touch panel 14B, and generates and stores guide route information in the RAM 12. In addition, the route search program 30 may enable the user to designate the destination, to designate a stopover indicating via which route the vehicle goes to the destination, and to designate various types of conditions for reducing a money amount such as shortening of a running distance, shortening of a running time or a toll road.

The guide route information is indicated by data of node rows for all nodes from the start point to the destination of the guide route searched by the control unit 10.

The control unit 10 outputs and displays a navigation map image 40 (not shown) indicated by a display mode (a color is changed, a line width is thickened or the like) of the guide route which is different from other roads on the LCD 14A, based on the guide route information.

At this time, the control unit 10 displays the navigation map image 40 indicating the guide route on the LCD 14A and generates voice information for inducing and assisting the operation of the user (for performing navigation) while the vehicle runs to the destination according to the guide route. The control unit 10 outputs the voice information to a speaker (not shown) as a navigation voice.

The PND 2 provides a navigation function for performing the navigation of the vehicle to the desired destination of the user.

The PND 2 includes a radio communication unit 16 including, for example, a WI-FI (registered trademark) module, and searches for the radio access point 3 (Fig. 1) for performing radio communication by the radio communication unit 16. When the radio access point 3 for performing radio communication is found, the PND 2 is wirelessly connected to the found radio access point 3 so as to be connected to the route search server 4 via the radio access point 3 and the Internet NT.

### 1-3. Circuit Configuration of Route Search Server

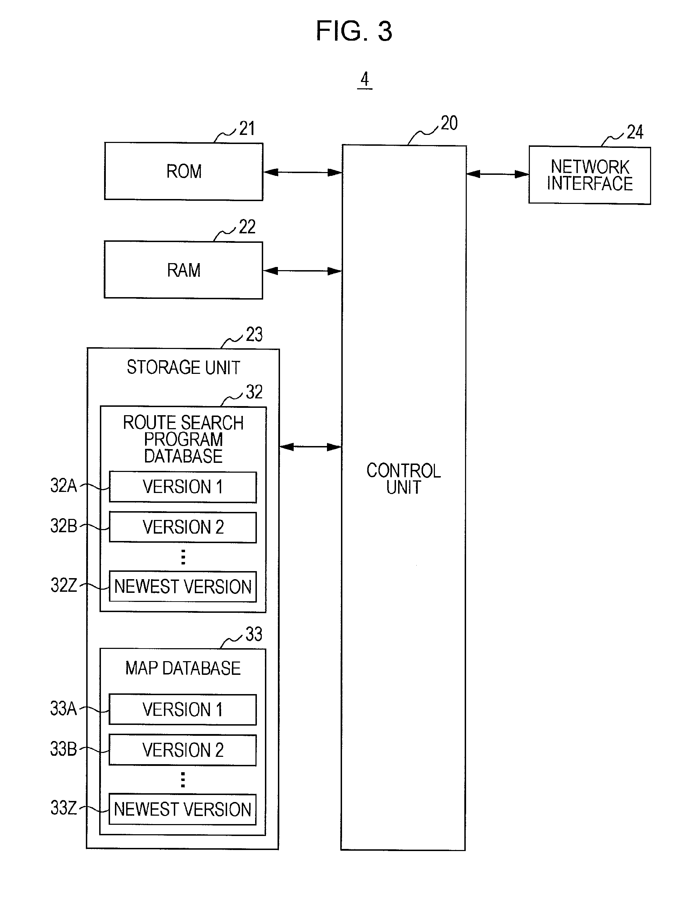

As shown in Fig. 3, in the route search server 4, the control unit 20 including the CPU develops the basic program stored in the ROM 21 in the RAM 22 and controls the whole according to the basic program.

The control unit 20 of the route search server 4 develops the various types of application programs stored in the ROM 21 or the storage unit 23 in the RAM 22 and processes various types of processes such as the route search process according to the application programs described below.

The storage unit 23 has a route search program database 32 for storing route search programs of all versions and a map database 33 for storing map data of all versions.

In the route search program database 32, a route search program 32A of a version 1, a route search program 32B of a version 2, ..., and a route search program 32Z of a latest version are stored together with the version information of the route search programs.

Meanwhile, in the map database 33, map data 33A of a version 1, map data 33B of a version 2, ..., and map data 33Z of a latest version are stored together with the version information of the map data.

The control unit 20 may read map data of a predetermined version from the map database 33 and a route search program of a predetermined version from the route search program database 32 to the RAM 22 so as to perform route search.

The control unit 20 performs communication with the PND 2 via a network interface 24, searches for various types of routes, and transmits guide route information, map data or the like to the PND 2.

The control unit 21 may acquire latest traffic information indicating a congested spot, a congestion degree, a spot where construction is performed, a traffic stop spot, and traffic jam information of an actual road via the network interface 24.

### 1-4. Route Search Process

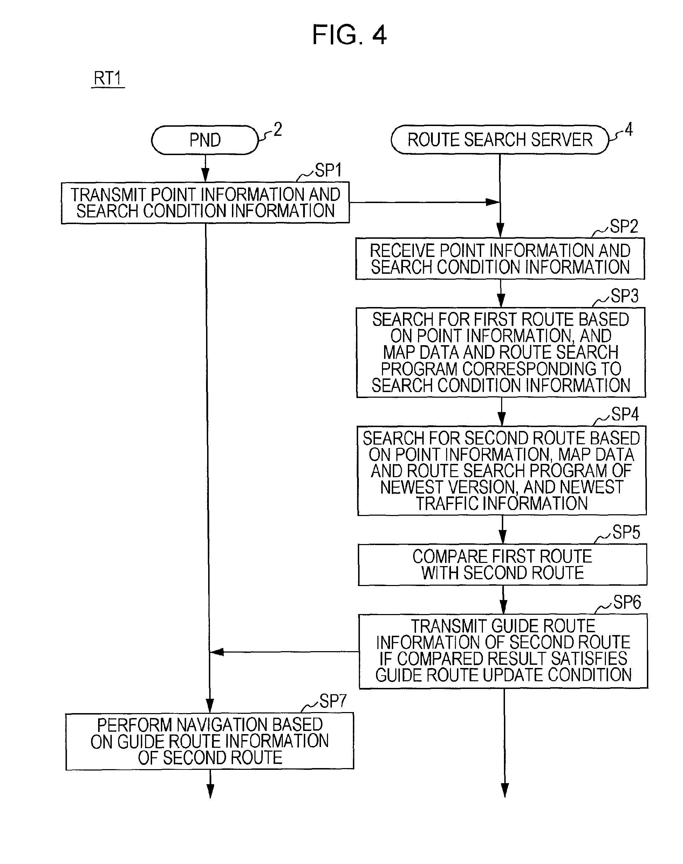

First, prior to the description of the detailed example of the embodiment, the outline of the route search processing procedure RT1 performed by the PND 2 and the route search server 4 will be described using the sequence chart shown in Fig. 4.

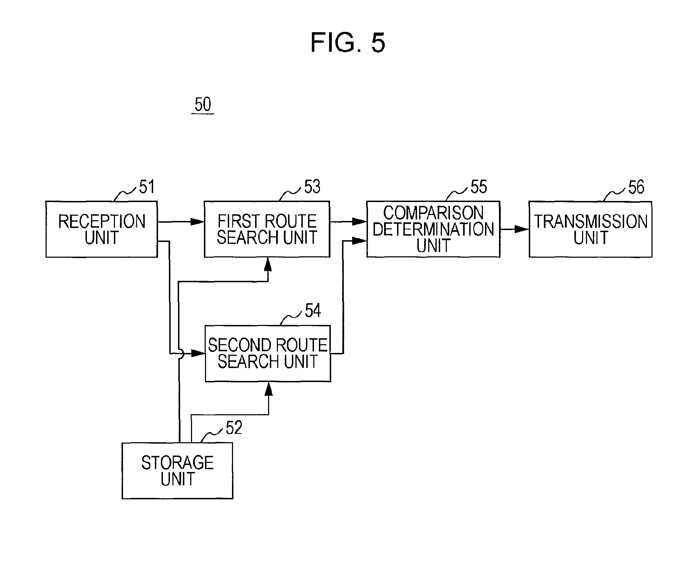

If the functions of the route search server 4 are represented by blocks, the functional block diagram of a guide route distribution device 50 corresponding to the route search server 4 shown in Fig. 5 may be obtained.

The control unit 10 of the PND 2 moves to step SP1 (Fig. 4) when an instruction for navigation initiation is received from the user. In step SP1, the control unit 10 sets a current position as a start point and transmits point information including the start point, a stopover and a destination, and search condition information including current map data version information and current route search program version information to the guide route distribution device 50.

Meanwhile, a reception unit 51 corresponding to the network interface 24 (Fig. 3) receives the point information and the search condition information in step SP2 and then moves to step SP3.

In step SP3, a first route search unit 53 corresponding to the control unit 20 (Fig. 3) reads map data of a version corresponding to the received search condition information and a route search program from a storage unit 52 corresponding to the storage unit 23 (Fig. 3).

The first route search unit 53 searches for a guide route (hereinafter, referred to as a first route) NR1 from the start point to the destination based on the map data and the route search program read from the storage unit 52 and the received point information. Subsequently, the first route search unit 53 stores guide route information of the first route NR1 and moves to step SP4.

To this end, the first route NR1 becomes a guide route searched for based on the current map data 31 and the current route search program 30 used in the PND 2, that is, a guide route equal to a guide route which is actually searched for by the PND 2.

If the version of the route search program is different, an algorithm for performing the route search may be different. Even when the route search is performed using the map data of the same version, the guide route which is the search result may be different.

Accordingly, the first route search unit 53 performs the route search of the first route NR1 based on the map data of the version corresponding to the current map data version information and the route search program of the version corresponding to the current route search program version information. To this end, the first route search unit 53 may perform route search under the same condition as the PND 2.

In step SP4, a second route search unit 54 corresponding to the control unit 20 (Fig. 3) reads map data 33Z of a latest version and a route search program 32Z of a new version from the storage unit 52. In addition, the second route search unit 54 receives latest traffic information using the reception unit 51.

In addition, the second route search unit 54 searches for a guide route (hereinafter, referred to as a second route) NR2 from the start point to the destination based on the map data 33Z and the route search program 32Z of the latest version, the received point information and the received traffic information. Subsequently, the second route search unit 54 stores guide route information of the second route NR2 and moves to step SP5.

To this end, the second route NR2 represents a most suitable guide route searched for based on the map data 33Z of the latest version or the like of the guide route distribution device 50.

In step SP5, a comparison determination unit 55 corresponding to the control unit 20 (Fig. 3) compares the second route NR2 searched for in step SP4 with the first route NR1 searched for in step SP3 and moves to step SP6.

In step SP6, the comparison determination unit 55 determines whether the second route NR2 satisfies a guide route update condition (which will be described in detail later) by the comparison of step SP5.

Subsequently, if the second route NR2 satisfies the guide route update condition, a transmission unit 56 corresponding to the network interface 24 (Fig. 3) transmits guide route information of the second route NR2 to the PND 2.

In step SP7, when the guide route information is received from the guide route distribution device 50, the control unit 10 of the PND 2 stores the guide route information of the second route NR2 in the RAM 12 and performs navigation based on the guide route information.

The navigation system 1 of the present invention searches for the first route NR1 and the second route NR2 and compares the second route NR2 with the first route NR1 in the guide route distribution device 50. Only when the second route NR2 satisfies the guide route update condition, the guide route distribution device 50 transmits the guide route information of the second route NR2.

### 1-5. Navigation Process

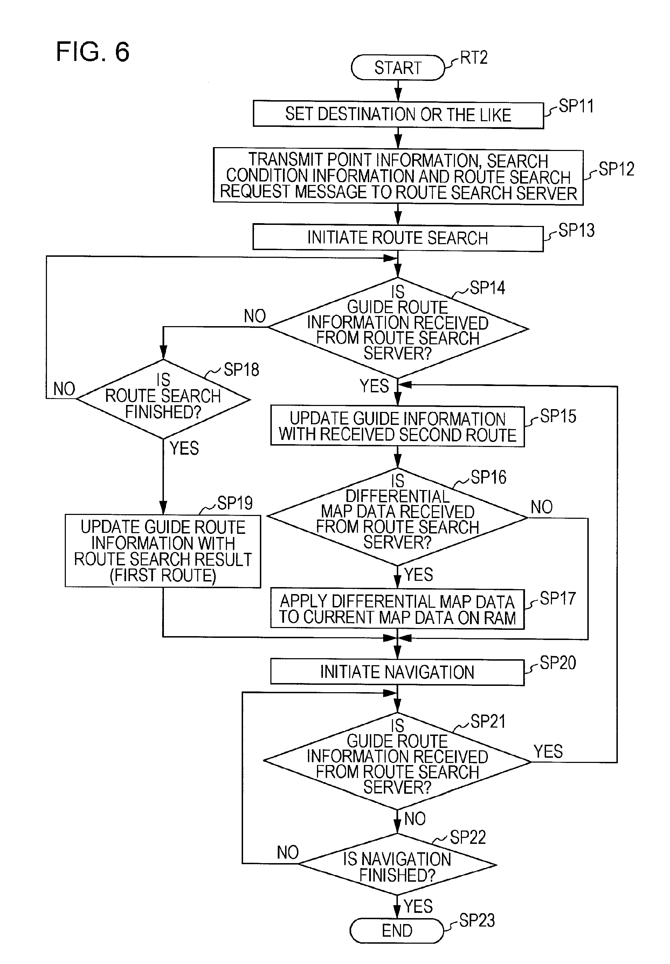

Next, a navigation processing procedure RT2 when the PND 2 performs navigation will be described using the flowchart shown in Fig. 6 as the specific example of the embodiment. The control unit 10 of the PND 2 receives designation of the destination or an instruction for navigation initiation from the user, communicates with the route search server 4, and performs navigation based on guide route information.

In step SP11, the control unit 10 of the PND 2 sets the designation or the like designated by the user and moves to next step SP12.

In step SP12, when the instruction for navigation initiation is received from the user, the control unit 10 transmits the point information including the start point, the stopover and the destination, and the search condition information including the current map data version information and the current route search program version information to the route search server 4. In addition, the control unit 10 transmits the route search request message to the route search server 4 and moves to next step SP13.

In step SP13, the control unit 10 executes the current route search program 30, refers to the current map data 31 so as to initiate route search, and moves to next step SP14.

In step SP14, the control unit 10 determines whether the guide route information is received from the route search server 4. If a positive result is obtained, the control unit 10 moves to step SP15.

In step SP15, the control unit 10 updates the guide route information on the RAM 12 with the guide route information of the second route NR2 derived by the route search of the route search server 4 and moves to next step SP16.

In step SP16, the control unit 10 determines whether differential map data (which will be described in detail later) is received from the route search server 4. If a positive result is obtained, the control unit 10 moves to next step SP17 and applies the differential map data to the current map data 31 read onto the RAM 12. Subsequently, the control unit 10 moves to step SP20 and initiates navigation.

Meanwhile, if a negative result is obtained in step SP16, the control unit 10 does not change the current map data 31 read onto the RAM 12, moves to step SP20, and starts navigation.

Meanwhile, if a negative result is obtained in step SP14, since the guide route information is not received from the route search server 4, the control unit 10 moves to step SP18 and determines whether route search is finished.

If a negative result is obtained in step SP18, since the route search is not finished in the control unit 10 of the PND 2, the control unit 10 returns to step SP14 and determines whether the guide route information is received from the route search server 4 while performing the route search.

Meanwhile, if a positive result is obtained in step SP18, the guide route information is not received from the route search server 4 from the start to the finish of the route search of the control unit 10 and the control unit 10 moves to next step SP19.

In step SP19, the control unit 10 sets the guide route derived by the route search of the control unit 10 of the PND 2 to the first route NR1. Subsequently, the control unit 10 updates the guide route information on the RAM 12 with the guide route information of the first route NR1, moves to next step SP20, and initiates navigation.

If the guide route information of the second route NR2 can be received from the route search server 4 from the start to the finish of the route search, the PND 2 stops the search of the first route NR1 in order preferentially to apply the second route NR2. The PND 2 initiates navigation based on the received guide route information of the second route NR2.

Meanwhile, if the guide route information of the second route NR2 may not be received from the route search server 4 from the start to the finish of the route search, the PND 2 initiates navigation based on the guide route information of the searched first route NR1.

Accordingly, the PND 2 can initiate navigation based on the guide route information by the route search server 4 without waiting for the finish of the route search by the PND 2 itself.

In step SP20, the control unit 10 initiates navigation based on the guide route information of the first route NR1 or the second route NR2 on the RAM 12 and determines whether the guide route information is received from the route search server 4 in next step SP21. Here, if a negative result is obtained, the control unit 10 moves to step SP22.

In step SP22, the control unit 10 determines whether the navigation is finished, because the vehicle reaches the periphery of the destination. Here, if a negative result is obtained, the control unit 10 returns to step SP21 and determines whether the guide route information is received from the route search server 4 again while continuously performing the navigation.

Meanwhile, if a positive result is obtained in step SP21, the control unit 10 of the PND 2 receives the guide route information of the second route NR2 which will be preferentially applied from the route search server 4. At this time, the control unit 10 moves to step SP17 and updates the guide route information on the RAM 12 with the guide route information of the second route NR2. Thereafter, the control unit 10 initiates the navigation again at the changed guide route as described above. At this time, the control unit 10 applies the received differential map data to the current map data on the RAM 12, if necessary.

Meanwhile, if a positive result is obtained in step SP22, the control unit 10 finishes the navigation, moves to next step SP24, and finishes the navigation processing procedure RT2.

If the guide route information of the second route NR2 can be received from the route search server 4 after starting the navigation, the PND 2 performs the navigation again based on the guide route information of the second route NR2.

### 1-6. Guide Route Information Distribution Process

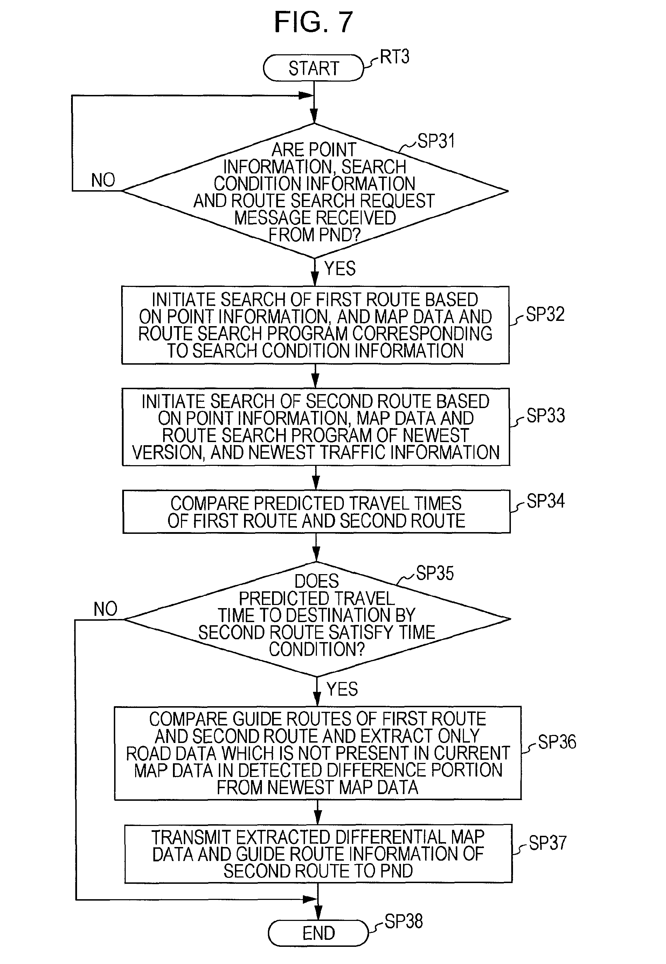

Next, as a specific example of the embodiment, a guide route information distribution processing procedure RT3 when the route search server 4 performs the distribution of the guide route information to the PND 2 will be described using the flowchart shown in Fig. 7. The control unit 20 of the route search server 4 communicates with the PND 2, searches for and compares various types of routes, and transmits the guide route information to the PND 2 if a time condition TR is satisfied as the guide route update condition.

In step SP31, the control unit 20 of the route search server 4 determines whether or not the route search request message is received from the PND 2, together with the point information including the start point or the like, the current map data version information and the current route search program version information. Here, if a negative result is obtained, the control unit 20 returns to step SP 31 and waits for the reception of the route search request message or the like.

If a positive result is obtained in step SP31, the control unit 20 moves to next step SP32 and initiates the route search of the first route NR1.

In step SP32, the control unit 20 searches for map data (hereinafter, referred to as designated map data) 35 of the same version as the received current map data version information from the map database 33 and reads the designated map data 35 to the RAM 22.

In addition, the control unit 20 searches for a route search program (hereinafter, referred to as a designated route search program) 34 of the same version as the received current route search program version information from the route search program database 32. Subsequently, the control unit 20 reads the designated route search program 34 to the RAM 22.

The control unit 20 executes the designated route search program 34, refers to the designated map data 35 and the received point information so as to perform the search of the first route NR1, stores the guide route information of the first route NR1, and moves to next step SP33. The route search result includes a predicted travel time, a predicted travel distance, and a predicted travel cost, which are necessary for arriving at the destination.

In step SP33, the control unit 20 reads the map data 33Z of the latest version from the map database 33 to the RAM 22. The control unit 20 reads the route search program 32Z of the latest version from the route search program database 32 to the RAM 22. In addition, the control unit 20 receives latest traffic information via the network interface 24.

In addition, the control unit 20 executes the route search program 32Z of the latest version, refers to the map data 33Z of the latest version and the received point information, and performs the search of the second route NR2 in consideration of the received traffic information.

Subsequently, the control unit 20 stores the guide route information of the second route NR2 and moves to next step SP34. The route search result includes a predicted travel time, a predicted travel distance, and a predicted travel cost, which are necessary for arriving at the destination, similar to the search of the first route NR1.

In step SP34, the control unit 20 compares the predicted travel times necessary for arriving at the destination of the first route NR1 and the second route NR2 and moves to next step SP35.

In step SP35, the control unit 20 determines whether the predicted travel time of the second route NR2 is more or less than the predicted travel time of the first route NR1 by the time condition TR described below. Hereinafter, the predicted travel time of the first route NR1 is referred to as a first travel route time NT1 and the predicted travel time of the second route NR2 is referred to as a second travel route time NT2.

The value of the time condition TR is determined to, for example, 40 [%] in advance, and corresponds to the guide route update condition of the above-described route search processing procedure RT1. This shows the condition that the second travel route time NT2 is shorter than the first travel route time NT1 by 40 [%] or more.

Here, for example, when the first travel route time NT1 is 60 [min] and the second travel route time NT2 is 30 [min], the second travel route time NT2 is less than the first travel route time NT1 by 50 [%].

In this case, since the second travel route time NT2 is less than the first travel route time NT1 by the time condition TR (40 [%]) or more, the determination of step SP35 becomes the positive result.

Meanwhile, for example, when the first travel route time NT1 is 60 [min] and the second travel route time NT2 is 42 [min], the second travel route time NT2 is less than the first travel route time NT1 by only 30 [%].

In this case, since the second travel route time NT2 is not less than the first travel route time NT1 by the time condition TR (40 [%]) or more, the determination of step SP35 becomes the negative result.

If a positive result is obtained in step SP35, the control unit 20 moves to next step SP36 and compares the first route NR1 and the second route NR2 so as to detect a difference portion. Subsequently, the control unit 20 extracts only road data which is present in the map data 33Z of the latest version but is not present in the designated map data 35 in the difference portion from the map data 33Z of the latest version as differential map data and moves to next step SP37.

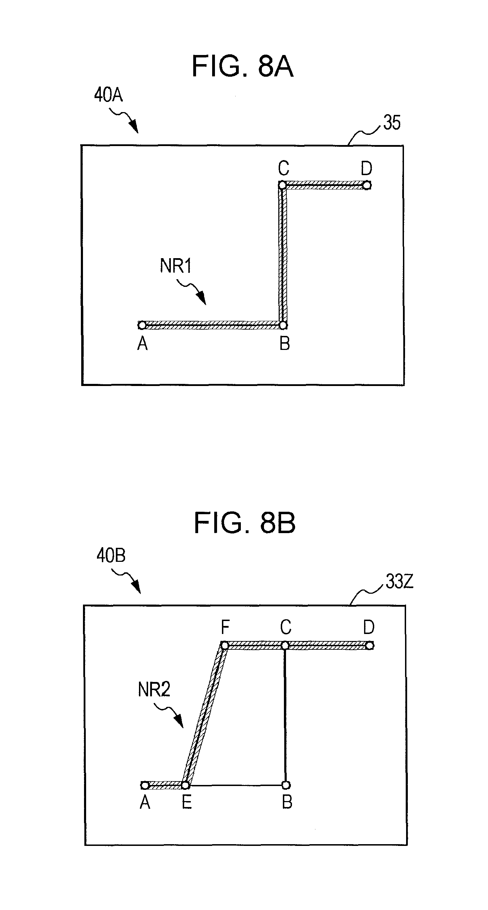

The detection and extraction will be described with reference to Fig. 8. In Fig. 8, the start point is set to a node A and the destination is set to a node D. The first route NR1 of the designated map data 35 is denoted by a thick line in a navigation map image 40A shown in Fig. 8A, and the second route NR2 of the map data 33Z of the latest version denoted by a thick line in a navigation map image 40B shown in Fig. 8B.

The guide route information of the first route NR1 shown in Fig. 8A is node A - node B - node C - node D and the guide route information of the second route NR2 shown in Fig. 8B is node A - node E - node F - node C - node D.

The control unit 20 determines whether or not the positions and the shapes of the road data included in the map data used by the guide routes are equal in the first route NR1 and the second route NR2.

In this case, in the difference portion of the guide route, the node E and the node F of the second route NR2 are not present in the designated map data 35. To this end, the control unit 20 extracts only the node E, the node F, and a link between the node E and the node F from the map data 33Z of the latest version as differential map data.

In step SP37, the control unit 20 transmits the differential map data (the node E, the node F, and the link between the node E and the node F) and the guide route information (node A - node E - node F - node C - node D) of the second route NR2 to the PND 2. In addition, the control unit 20 moves to next step SP38 and finishes the guide route information distribution process RT3.

Here, the control unit 10 of the PND 2 which receives the differential map data adds the differential map data (the node E, the node F, and the link between the node E and the node F) to the current map data 31 read onto the RAM 12 of the PND 2. In addition, the control unit 10 does not add the differential map data to the current map data 31 stored in the storage unit 13 of the PND 2.

Meanwhile, if a negative result is obtained in step SP35, it is indicated that the predicted travel time of the second route NR2 is less than the predicted travel time of the first route NR1 by the time condition TR or more. At this time, the control unit 20 does not transmit the guide route information of the second route NR2 which does not satisfy the time condition TR to the PND 2, moves to step SP38, and finishes the guide route information distribution process RT3.

The route search server 4 searches for the first route NR1 and the second route NR2, and compares the second route NR2 with the first route NR1. In addition, the route search server 4 extracts the difference portion from the map data 33Z of the latest version as the differential map data, if the second route NR2 satisfies the time condition TR. Subsequently, the route search server 4 transmits the differential map data and the guide route information of the second route NR2 to the PND 2.

### 1-7. Operation and Effect

In the above configuration, the route search server 4 executes the route search program 32Z of the latest version, refers to the map data 33Z of the latest version, performs the search of the second route NR2 in consideration of the traffic information, and transmits the guide route information to the PND 2.

Therefore, the PND 2 performs navigation based on the guide route with high accuracy and reliability, which is searched for by the route search server 4.

The route search server 4 searches for the first route NR1 based on the same condition (the map data and the route search program) of the search route using the PND 2 and searches for the second route NR2 based on the latest map data 33Z and route search program 32Z and the traffic information.

In addition, the route search server 4 compares the second travel route time NT2 and the first travel route time NT1 and transmits the guide route information of the second route NR2 or the like to the PND 2 only when the second travel route time NT2 satisfies the time condition TR.

At this time, the PND 2 may perform navigation in the guide route with the predicted travel time to the destination which is less than the predicted travel time of the searched first route NR1.

Meanwhile, the route search server 4 does not transmit the guide route information of the second route NR2 or the differential map data to the PND 2 unless the predicted travel time to the destination is shortened by the predetermined condition or more by applying the second route NR2.

At this time, since the route search server 4 does not unconditionally transmit the guide route information of the second route NR2 or the differential map data to the PND 2, it is possible to reduce a communication data amount and, as a result, to reduce communication costs.

Since the PND 2 does not automatically rewrite the map data or does not urge the user to change the guide route when the predicted travel time to the destination is not significantly improved, it is possible to perform navigation without giving stress to the user.

In addition, the route search server 4 extracts and transmits only the difference portion between the first route NR1 and the second route NR2 from the map data 33Z of the latest version to the PND 2 as the differential map data.

For example, in the navigation map image 40B shown in Fig. 8B, even when another road is present between the node E and the node F, since the road is not included in the second route NR2, the route search server 4 does not transmit the link and the node of the road to the PND 2.

Therefore, the route search server 4 can minimize a communication data amount and rapidly perform the update of the navigation map image 40 of the PND 2.

In general, the computation capability of the route search server 4 is higher than that of the PND 2 which is the on-vehicle terminal. To this end, the PND 2 can obtain the guide route information searched for by the route search server 4 without waiting for the finish of the route search of the PND 2 itself so as to provide a navigation function to the user.

The PND 2 enables the route search server 4 to perform route search and the PND 2 itself performs route search.

Therefore, even when the PND 2 may not receive the guide route information of the second route NR2 from the route search server 4 due to a communication error or a no-service range, it is possible to perform navigation by the first route NR1 searched for by the PND 2 itself.

The PND 2 applies the differential map data received from the route search server 4 only to the current map data 31 read onto the RAM 12 and does not apply the differential map data to the current map data 31 stored in the storage unit 13.

Therefore, the PND 2 does not have to perform a troublesome process of updating the contents of the storage unit 13 and can temporarily display only the road which is necessary for the guide route and is not present in the current map data 31 so as to perform navigation.

According to the above configuration, the route search server 4 searches for the first route NR1 based on the same condition (the map data and the route search program) of the search route using the PND 2 and searches for the second route NR2 based on the latest map data 33Z and route search program 32Z and the traffic information. In addition, the route search server 4 compares the second travel route time NT2 and the first travel route time NT1 and transmits the guide route information of the second route NR2 or the like to the PND 2 only when the second travel route time NT2 satisfies the time condition TR. In addition, the route search server 4 extracts and transmits only the difference portion between the first route NR1 and the second route NR2 from the map data 33Z of the latest version to the PND 2 as the differential map data. Accordingly, the route search server 4 can transmit the guide route to the PND 2 with respect only to the guide route which is worthwhile enabling the PND 2 to download communication data with respect to time or cost. Thus, it is possible to reduce the communication data amount of the PND 2 and the route search server 4.

### 2. Second Embodiment

In the navigation system 1 of a second embodiment shown in Fig. 1, the PND 2 and the route search server 4 are configured similarly to the first embodiment. The route search processing procedure RT1 performed by the PND 2 and the route search server 4, which is shown in Fig. 4, is equal to that of the first embodiment.

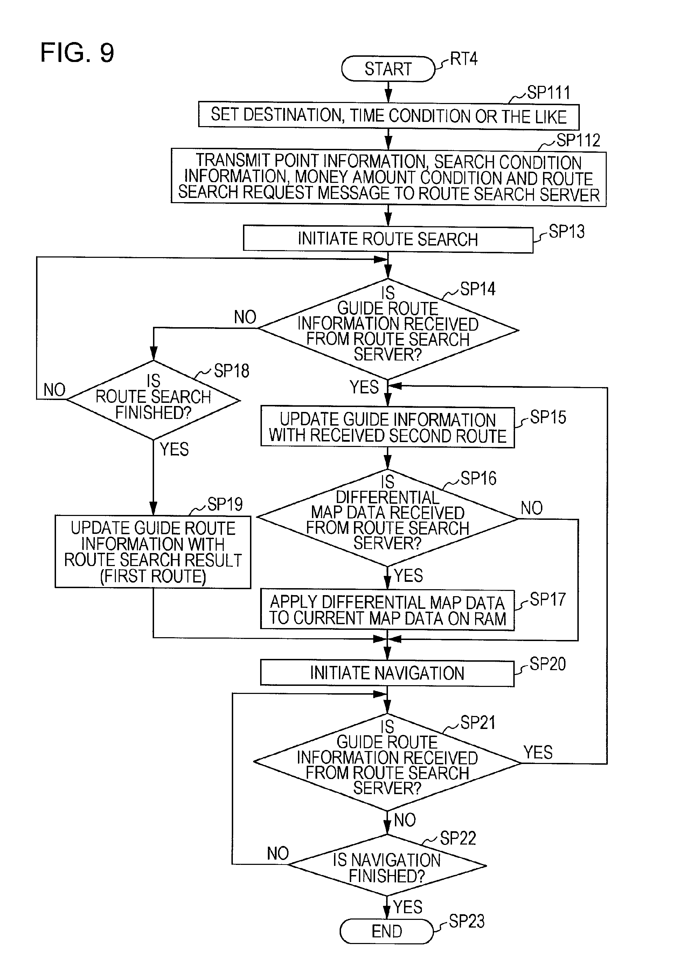

The PND 2 of the second embodiment executes a navigation processing procedure RT4 of the second embodiment shown in Fig. 9, instead of the navigation processing procedure RT2 of the first embodiment shown in Fig. 6, when navigation is performed.

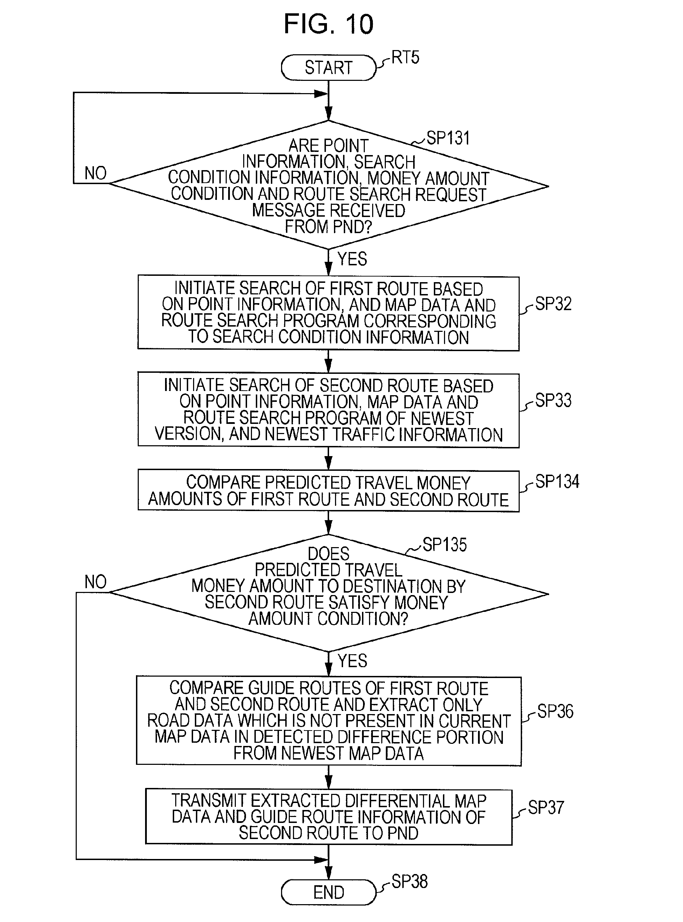

The route search server 4 of the second embodiment executes a guide route information distribution processing procedure RT5 of the second embodiment shown in Fig. 10, instead of the guide route information distribution processing procedure RT3 of the first embodiment shown in Fig. 7, when the distribution of the guide route information to the PND 2 is performed.

### 2-1. Navigation Process

When the navigation processing procedure RT4 of the second embodiment is compared with the navigation processing procedure RT2 of the first embodiment, steps SP111 and SP112 are different from steps SP11 and SP12, but the other portion is equal. Hereinafter, steps SP111 and SP112 will be described.

The control unit 10 of the PND 2 receives a destination, designation of a money amount condition CR or the like as a route update condition or an instruction for navigation initiation from the user, communicates with the route search server 4, and performs navigation based on guide route information.

In step SP111, the control unit 10 sets the destination or the money amount condition CR designated by the user and moves to next step SP112.

In step SP112, the control unit 10 transmits the point information including a start point, a stopover and the destination to the route search server 4 when receiving the instruction for navigation initiation from the user. In addition, the control unit 10 transmits search condition information including current map data version information and current route search program version information, the money amount condition CR and a route search request message to the route search server 4, and moves to next step SP13.

In the navigation processing procedure RT4 of the second embodiment, the control unit 10 enables the user to designate the money amount condition CR as the guide route update condition and transmits the money amount condition CR to the route search server 4.

### 2-2. Guide Route Information Distribution process

When a guide route information distribution processing procedure RT5 (Fig. 10) of the second embodiment is compared with the guide route information distribution processing procedure RT3 of the first embodiment, step SP131 is different from step SP31. Steps SP134 and SP135 are different from steps SP34 and SP35, but the other portion is equal. Hereinafter, steps SP131, SP134 and SP135 will be described.

The control unit 20 of the route search server 4 communicates with the PND 2, searches for and compares various routes, and transmits guide route information to the PND 2 if the money amount condition CR is satisfied.

In step SP131, the control unit 20 determines whether the point information including the start point or the like, the search condition information including the current map data version information and the current route search program version information, and the money amount condition CR are received from the PND 2. In addition, the control unit 20 determines whether the route search request message is received from the PND 2. Here, if a negative result is obtained, the control unit 20 returns to step SP131 and waits for the reception of the route search request message or the like.

If a positive result is obtained in step SP131, the control unit 20 moves to next step SP32 and initiates the route search of the first route NR1. The subsequent processing procedure to step SP33 is equal to the guide route information distribution processing procedure RT3 of the first embodiment.

In step SP134, the control unit 20 compares the predicted travel money amounts of toll roads or the like used in the first route NR1 and the second route NR2 and moves to next step SP135.

In step SP135, the control unit 20 determines whether the predicted travel money amount of the second route NR2 is less than the predicted travel money amount of the first route NR1 by the money amount condition CR or more. Hereinafter, the predicted travel money amount of the first route NR1 is referred to as a first travel route money amount NC1 and the predicted travel money amount of the second route NR2 is referred to as a second travel route money amount NC2.

The money amount condition CR is equal to, for example, 2000 [Yen] received from the PND 2 in step SP131 and corresponds to the guide route update condition of the above-described route search processing procedure RT1 (Fig. 4). This indicates that the second travel route money amount NC2 is less than the first travel route money amount NC1 by 2000 [Yen] or more.

Here, for example, when the first travel route money amount NC1 is 10000 [Yen] and the second travel route money amount NC2 is 7000 [Yen], the second travel route money amount NC2 is less than the first travel route money amount NC1 by 3000 [Yen].

In this case, since the second travel route money amount NC2 is less than the first travel route money amount NC1 by the money amount condition CR (2000 [Yen]) or more, the determination of step SP135 becomes a positive result.

Meanwhile, for example, when the first travel route money amount NC1 is 10000 [Yen] and the second travel route money amount NC2 is 9000 [Yen], the second travel route money amount NC2 is less than the first travel route money amount NC1 by only 1000 [Yen].

In this case, since the second travel route money amount NC2 is not less than the first travel route money amount NC1 by the money amount condition CR (2000 [Yen]) or more, the determination of step SP135 becomes a negative result.

If the positive result is obtained in step SP135, the control unit 20 moves to next step SP36 and compares the first route NR1 and the second route NR2 so as to detect a difference portion. The subsequent processing procedure is equal to the guide route information distribution processing procedure RT3 of the first embodiment.

Meanwhile, if the negative result is obtained in step SP135, this indicates that the second travel route money amount NC2 is not less than the first travel route money amount NC1 by the money amount condition CR or more. At this time, the control unit 20 does not transmit the guide route information of the second route NR2 which does not satisfy the money amount condition CR to the PND 2, moves to step SP38, and finishes the guide route information distribution processing procedure RT5.

### 2-3. Operation and Effect

In the above configuration, the route search server 4 executes the route search program 32Z of the latest version, refers to the map data 33Z of the latest version, performs the search of the second route NR2 in consideration of the traffic information, and transmits the guide route information to the PND 2.

Therefore, the PND 2 performs navigation based on the guide route with high accuracy and reliability, which is searched for by the route search server 4.

The route search server 4 searches for the first route NR1 based on the same condition (the map data and the route search program) of the search route using the PND 2 and searches for the second route NR2 based on the latest map data 33Z and route search program 32Z and the traffic information.

In addition, the route search server 4 compares the second travel route money amount NC2 and the first travel route money amount NC1 and transmits the guide route information of the second route NR2 or the like to the PND 2 only when the second travel route money amount NC2 satisfies the money amount condition CR.

At this time, the PND 2 may perform navigation based on the guide route with the predicted travel money amount to the destination which is less than the predicted travel money amount of the first route NR1.

Meanwhile, the route search server 4 does not transmit the guide route information of the second route NR2 or the differential map data to the PND 2 unless the predicted travel money amount to the destination is reduced by the predetermined condition or more by applying the second route NR2.

At this time, since the route search server 4 does not unconditionally transmit the guide route information of the second route NR2 or the differential map data to the PND 2, it is possible to reduce a communication data amount and, as a result, to reduce communication costs.

Since the PND 2 does not automatically rewrite the map data or does not urge the user to change the guide route when the predicted travel money amount to the destination is not significantly improved, it is possible to perform navigation without giving stress to the user.

In addition, the PND 2 enables the user to designate the money amount condition CR and transmit the money amount condition to the route search server 4.

Therefore, the PND 2 can set the guide route according to the request of the user.

The PND 2 and the route search server 4 of the second embodiment substantially have the same effects as the first embodiment.

According to the above configuration, the route search server 4 searches for the first route NR1 based on the same condition (the map data and the route search program) of the search route using the PND 2 and searches for the second route NR2 based on the latest map data 33Z and route search program 32Z and the traffic information. In addition, the route search server 4 compares the second travel route money amount NC2 and the first travel route money amount NC1 and transmits the guide route information of the second route NR2 or the like to the PND 2 only when the second travel route money amount NC2 satisfies the money amount condition CR designated by the user. In addition, the route search server 4 extracts and transmits only the difference portion between the first route NR1 and the second route NR2 from the map data 33Z of the latest version to the PND 2 as the differential map data. Accordingly, the route search server 4 can transmit the guide route to the PND 2 with respect only to the guide route which is worthwhile enabling the PND 2 to download communication data with respect to time or cost. Thus, it is possible to reduce the communication data amount of the PND 2 and the route search server 4.

### 3. Third Embodiment

In the navigation system 1 of a third embodiment shown in Fig. 1, the PND 2 and the route search server 4 are configured similar to the first embodiment. The route search processing procedure RT1 performed by the PND 2 and the route search server 4, which is shown in Fig. 4, is equal to that of the first embodiment.

The navigation processing procedure RT2 when the PND 2 performs navigation in the third embodiment is equal to the first embodiment.

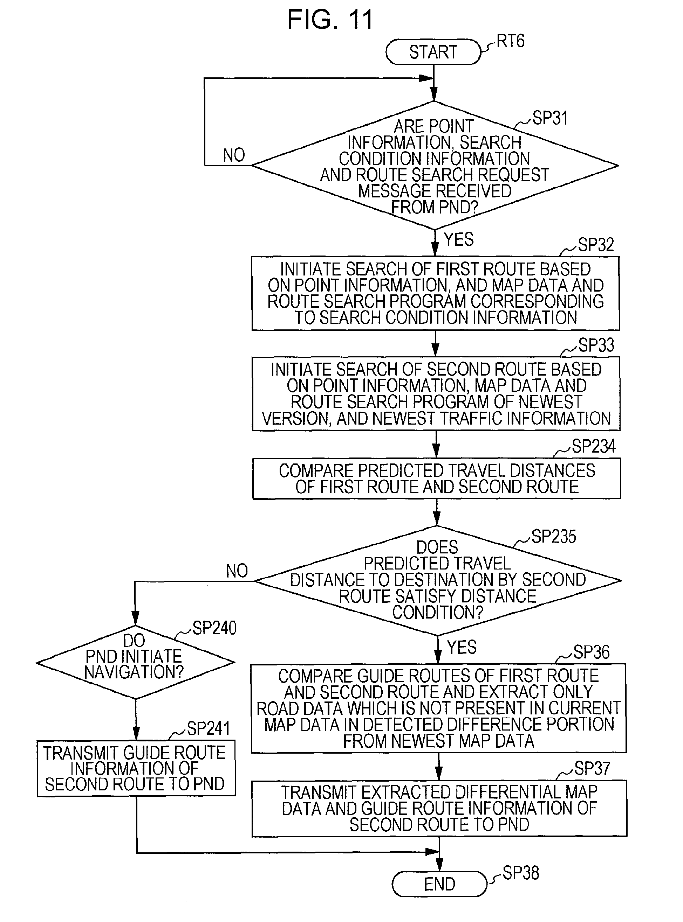

The route search server 4 of the third embodiment executes a guide route information distribution processing procedure RT6 of the third embodiment shown in Fig. 11, instead of the guide route information distribution processing procedure RT3 of the first embodiment shown in Fig. 7, when the distribution of the guide route information to the PND 2 is performed.

### 3-1. Guide Route Information Distribution process

When the guide route information distribution processing procedure RT6 (Fig. 11) of the third embodiment is compared with the guide route information distribution processing procedure RT3 of the first embodiment, steps SP234 and SP235 are different from steps SP34 and SP35. In addition, steps SP240 and SP241 are added, but the other portion is equal. Hereinafter, steps SP234, SP235, SP240 and SP241 will be described.

In step SP234, the control unit 20 of the route search server 4 compares predicted travel distances to the destination of the first route NR1 and the second route NR2 and moves to next step SP235.

In step SP235, the control unit 20 determines whether the predicted travel distance of the second route NR2 is more or less than the predicted travel distance of the first route NR1 by the distance condition DR described below. Hereinafter, the predicted travel distance of the first route NR1 is referred to as a first travel route distance ND1 and the predicted travel distance of the second route NR2 is referred to as a second travel route distance ND2.

The distance condition DR is set to, for example, 20 [km] in advance and corresponds to the guide route update condition of the above-described route search processing procedure RT1 (Fig. 4). This indicates that the second travel route distance ND2 is less than the first travel route distance ND1 by 20 [km] or more.

Here, for example, when the first travel route distance ND1 is 50 [km] and the second travel route distance ND2 is 20 [km], the second travel route distance ND2 is less than the first travel route distance ND1 by 30 [km].

In this case, since the second travel route distance ND2 is less than the first travel route distance ND1 by the distance condition DR (20 [km]) or more, the determination of step SP235 becomes a positive result.

Meanwhile, for example, when the first travel route distance ND1 is 50 [km] and the second travel route distance ND2 is 40 [km], the second travel route distance ND2 is less than the first travel route distance ND1 by only 10 [km].

In this case, since the second travel route distance ND2 is not less than the first travel route distance ND1 by the distance condition DR (20 [km]) or more, the determination of step SP235 becomes a negative result.

If the positive result is obtained in step SP235, the control unit 20 moves to next step SP36 and compares the first route NR1 and the second route NR2 so as to detect a difference portion. The subsequent processing procedure is equal to the guide route information distribution processing procedure RT3 of the first embodiment.

Meanwhile, if the negative result is obtained in step SP235, the control unit 20 moves to step SP240, communicates with the PND 2, and determines whether or not the PND 2 already initiates navigation.

Here, if a negative result is obtained, the PND 2 does not initiate navigation yet, the control unit 20 moves to step SP241 and transmits the guide route information of the second route NR2 to the PND 2. In addition, the control unit 20 moves to step SP38 and finishes the guide route information distribution process RT6.

In addition, in step SP14 of the navigation processing procedure RT2 of the third embodiment shown in Fig. 6, the control unit 10 of the PND 2 determines whether or not the guide route information of the second route NR2 is received from the route search server 4.

Meanwhile, if a positive result is obtained in step SP240, this indicates that the PND 2 already initiates navigation. Therefore, the control unit 20 of the route search server 4 does not transmit the guide route information of the second route NR2 which does not satisfy the distance condition DR to the PND 2, moves to step SP38, and finishes the guide route information distribution process RT6.

### 3-2. Operation and Effect

In the above configuration, the route search server 4 executes the route search program 32Z of the latest version, refers to the map data 33Z of the latest version, performs the search of the second route NR2 in consideration of the traffic information, and transmits the guide route information to the PND 2.

Therefore, the PND 2 performs navigation based on the guide route with high accuracy and reliability, which is searched for by the route search server 4.

The route search server 4 searches for the first route NR1 based on the same condition (the map data and the route search program) of the search route using the PND 2 and searches for the second route NR2 based on the latest map data 33Z and route search program 32Z and the traffic information.

In addition, the route search server 4 compares the second travel route distance ND2 and the first travel route distance ND1 and transmits the guide route information of the second route NR2 or the like to the PND 2 only when the second travel route distance ND2 satisfies the distance condition DR.

At this time, the PND 2 may perform navigation based on the guide route information with the predicted travel distance to the destination which is less than the predicted travel distance of the first route NR1.

Meanwhile, the route search server 4 does not transmit the guide route information of the second route NR2 or the differential map data to the PND 2 unless the predicted travel distance to the destination is reduced by the predetermined condition or more by applying the second route NR2.

At this time, since the route search server 4 does not unconditionally transmit the guide route information of the second route NR2 or the differential map data to the PND 2, it is possible to reduce a communication data amount and, as a result, to reduce communication costs.

Since the PND 2 does not automatically rewrite the map data or does not urge the user to change the guide route when the predicted travel distance to the destination is not significantly improved, it is possible to perform navigation without giving stress to the user.

In general, the computation capability of the route search server 4 is higher than that of the PND 2 which is the on-vehicle terminal. In addition, even when the second travel route distance ND2 does not satisfy the distance condition DR, if the PND 2 does not initiate navigation at a time point when the search of the second route NR2 is finished, the route search server 4 transmits the guide route information of the second route NR2 or the like to the PND 2.

To this end, even when the received second route NR2 may not be further improved over the first route NR1 searched for by the PND 2 itself, the PND 2 can more rapidly provide the navigation function to the user compared with the case where the route search of the PND 2 is finished.

The PND 2 and the route search server 4 of the third embodiment substantially have the same effects as the first embodiment.

According to the above configuration, the route search server 4 searches for the first route NR1 based on the same condition (the map data and the route search program) of the search route using the PND 2 and searches for the second route NR2 based on the latest map data 33Z and route search program 32Z and the traffic information. In addition, the route search server 4 compares the second travel route distance ND2 and the first travel route distance ND1 and transmits the guide route information of the second route NR2 or the like to the PND 2 only when the second travel route distance ND2 satisfies the distance condition DR. In addition, the route search server 4 extracts and transmits only the difference portion between the first route NR1 and the second route NR2 from the map data 33Z of the latest version to the PND 2 as the differential map data. Accordingly, the route search server 4 can transmit the guide route to the PND 2 with respect only to the guide route which is worthwhile enabling the PND 2 to download communication data with respect to time or cost. Thus, it is possible to reduce the communication data amount of the PND 2 and the route search server 4.

### 4. Other Embodiments

In the above-described third embodiment, the case where the route search server 4 transmits the guide route information of the second route NR2 to the PND 2 when the PND 2 does not initiate navigation if the second route NR2 does not satisfy the distance condition DR as the guide route update condition is described.

The present invention is not limited thereto and the route search server 4 of the first embodiment and the second embodiment may also transmit the guide route information of the second route NR2 to the PND 2 when the PND 2 does not initiate navigation if the second route NR2 does not satisfy the guide route update condition.

In the above-described second embodiment, the case where the PND 2 enables the user to designate the money amount condition CR as the guide route update condition is described.

The present invention is not limited thereto and the PND 2 may enable the user to designate the time condition TR of the first embodiment and the distance condition DR of the third embodiment.

Therefore, the PND 2 can set the guide route according to the request of the user.

In the above-described embodiments, the case where the route search server 4 transmits the guide route information of the second route NR2 to the PND 2 only when the second route NR2 satisfies the time condition TR, the money amount condition CR or the distance condition DR as the guide route update condition is described.

The present invention is not limited thereto and the time condition TR, the money amount condition CR and the distance condition DR may be arbitrarily combined as the guide route update condition. Accordingly, it is possible variously to set the guide route update condition and more adequately to determine whether or not the second route NR2 is transmitted.

In the above-described embodiments, the case where the time condition TR, the money amount condition CR and the distance condition DR are used as the guide route update condition is described.

The present invention is not limited thereto and, for example, various guide route update conditions such as the number of turns to the left and right and the number of times of passage of a road having a small width may be provided.

In the above-described embodiments, the case where version information is used as the information for identifying the generation of the current route search program 30 or the current map data 31 is described.

The present invention is not limited thereto and, for example, information indicating an update date and hour may be used as information for identifying the generation of the current route search program 30 or the current map data 31.

In the above-described embodiments, the case where the PND 2 applies the received differential map data only to the current map data 31 read onto the RAM 12 and does not apply the differential map data to the current map data 31 stored in the storage unit 13 is described.

The present invention is not limited thereto and the differential map data may be applied to the current map data 31 stored in the storage unit 13. In this case, for example, the PND 2 may immediately apply the differential map data to the current map data 31 stored in the storage unit 13. Alternatively, the PND 2 may store the history of the received differential map data and apply only map data of which the number of times of reception is large to the current map data 31 stored in the storage unit 13. Therefore, the PND 2 may add the data of a road of which the number of times of passages of the user is large and which is not present in the current map data 31 to the current map data 31.

In the above-described embodiments, the case where the route search server 4 searches for the second route NR2 based on the latest map data 33Z and route search program 32Z and the traffic information is described.

The present invention is not limited thereto and the route search server 4 may search for the second route NR2 based on other map data and route search program. That is, the route search server 4 searches for the second route NR2 based on whether the version of the current map data 31 possessed by the PND 2 is equal to that of the current route search program 30, a new version and the traffic information. Since the route search server 4 can perform the route search in consideration of latest traffic information even when the same version as the current map data 31 and the current route search program 30 is used, the guide route information having a shorter travel time to the destination can be transmitted to the PND 2.

In the above-described embodiments, the case where the PND 2 sets the current point of the vehicle as the start point and transmits the start point or the like to the route search server 4 as the point information is described. The present invention is not limited thereto and, for example, the PND 2 may enable the user to designate any start point.

In the above-described embodiments, the case where traffic information is not considered when the PND 2 searches for the first route NR1 is described.

The present invention is not limited thereto and, for example, the PND 2 may include a Vehicle Information and Communication System (VICS) receiver or the like and may perform route search in consideration of the traffic information. The PND 2 may not receive the traffic information according to the position of the vehicle. Even in this case, by receiving the second route NR2 searched for by the route search server 4 which can receive the latest traffic information, the PND 2 can perform navigation based on the guide route with high reliability.

In the above-described embodiments, the case where the control unit 20 of the route search server 4 executes the guide route information distribution processing procedures RT3, RT5 and RT6 according to an application program stored in the storage unit 23 or the ROM 21 in advance is described.

The present invention is not limited thereto and the control unit 20 may execute the guide route information distribution processing procedures RT3, RT5 and RT6 according to an application program which is installed from a predetermined recording medium, is downloaded from the Internet or is installed by various routes.

In the above-described embodiments, the case where the route search server 4 as the guide route distribution device is configured by the reception unit, the transmission unit, the network interface 24 of the route search server 4 as a traffic information reception unit, the storage unit 23 of the route search server 4 as a storage unit, the first route search unit, the second route search unit, and the control unit 20 of the route search server 4 as a comparison determination unit is described.

The present invention is not limited thereto and the guide route distribution device may be configured by the reception unit, the transmission unit, the traffic information reception unit, the storage unit, the first route search unit, the second route search unit and the comparison determination unit configured variously.

The guide route distribution device and the guide route distribution method of the present invention are applicable to, for example, various mobile equipments such as a mobile telephone including a GPS module, a Personal Data Assistance (PDA), a notebook type personal computer and a game machine, in addition to a PND.

The present application contains subject matter related to that disclosed in Japanese Priority Patent Application JP 2009-036896 filed in the Japan Patent Office on February 19, 2009.

It should be understood by those skilled in the art that various modifications, combinations, sub-combinations and alterations may occur depending on design requirements and other factors insofar as they are within the scope of the appended claims or the equivalents thereof.

## Claims

1. A guide route distribution device comprising:
a reception unit (51) configured to receive information indicating a start point, information indicating a destination, map data generation information for identifying generation of map data possessed by a mobile terminal, and route search program generation information for identifying generation of a route search program for performing route search of a guide route from the start point to the destination, which is possessed by the mobile terminal, from the mobile terminal;
a storage unit (52) configured to store map data of a plurality of generations including map data possessed by the mobile terminal and route search programs of a plurality of generations including a route search program possessed by the mobile terminal;
a first route search unit (53) configured to search for a first route which is a guide route from the start point to the destination, based on map data of a generation indicated by the map data generation information and a route search program of a generation indicated by the route search program generation information, which are read by the storage unit (52);
a second route search unit (54) configured to search for a second route which is a guide route from the start point to the destination, based on map data of a generation equal to or updated from the map data possessed by the mobile terminal and a route search program of a generation equal to or updated from the route search program possessed by the mobile terminal, which are read by the storage unit (52);
a comparison determination unit (55) configured to compare the first route and the second route and determine whether a predetermined guide route update condition is satisfied; and
a transmission unit (56) configured to transmit the second route to the mobile terminal only when the guide route update condition is satisfied.

2. The guide route distribution device according to claim 1, wherein the comparison determination unit (55) sets that a predicted travel time from the start point to the destination in the second route is less than a predicted travel time from the start point to the destination in the first route by a predetermined time, as the guide route update condition.

3. The guide route distribution device according to claim 1, wherein the comparison determination unit (55) sets that a predicted travel money amount from the start point to the destination in the second route is less than a predicted travel money amount from the start point to the destination in the first route by a predetermined money amount, as the guide route update condition.

4. The guide route distribution device according to claim 1, wherein the comparison determination unit (55) sets that a predicted travel distance from the start point to the destination in the second route is less than a predicted travel distance from the start point to the destination in the first route by a predetermined distance, as the guide route update condition.

5. The guide route distribution device according to claim 1, wherein the reception unit (51) receives the guide route update condition from the mobile terminal.

6. The guide route distribution device according to claim 1, wherein:
the comparison determination unit (55) extracts only a difference portion between the first route and the second route from the map data of a generation equal to or updated from the map data possessed by the mobile terminal,
the transmission unit (56) transmits only the difference portion to the mobile terminal.

7. The guide route distribution device according to claim 1, further comprising a traffic information reception unit configured to receive traffic information,
wherein the second route search unit (54) searches for the second route which is the guide route from the start point to the destination, based on the map data of a generation equal to or updated from the map data possessed by the mobile terminal, the route search program of a generation equal to or updated from the route search program possessed by the mobile terminal, and the traffic information, which are read by the storage unit (52).

8. A guide route distribution method comprising the steps of:
at a predetermined reception unit (51), receiving information indicating a start point, information indicating a destination, map data generation information for identifying generation of map data possessed by a mobile terminal, and route search program generation information for identifying generation of a route search program for performing route search of a guide route from the start point to the destination, which is possessed by the mobile terminal, from the mobile terminal;
at a predetermined first route search unit, (53) searching for a first route which is a guide route from the start point to the destination, based on map data of a generation indicated by the map data generation information and a route search program of a generation indicated by the route search program generation information, which are read by a predetermined storage unit (52);
at a predetermined second route search unit (54), searching for a second route which is a guide route from the start point to the destination, based on map data of a generation equal to or updated from the map data possessed by the mobile terminal and a route search program of a generation equal to or updated from the route search program possessed by the mobile terminal, which are read by the storage unit (52);
at a predetermined comparison determination unit (55), comparing the first route and the second route and determining whether a predetermined guide route update condition is satisfied; and
at a predetermined transmission unit (56), transmitting the second route to the mobile terminal only when the guide route update condition is satisfied.
